(19) Europäisches Patentamt
European Patent Office
Office européen des brevets

(11) EP 0 666 283 B1

(12) EUROPEAN PATENT SPECIFICATION

(45) Date of publication and mention of the grant of the patent:
**03.07.2002 Bulletin 2002/27**

(51) Int Cl.[7]: **C08K 5/15**, C09D 123/06, C08L 23/06

(21) Application number: **95200251.7**

(22) Date of filing: **02.02.1995**

(54) **Use of low-density polyethylene for extrusion coating**

Verwendung von Polyéthylen niedriger Dichte zur Extrusionsbeschichtung

Utilisation de polyéthylène basse densité dans le procédé de recouvrement par extrusion

(84) Designated Contracting States:
**AT BE CH DE DK ES FR GB IE IT LI LU NL SE**

(30) Priority: **08.02.1994 BE 9400144**

(43) Date of publication of application:
**09.08.1995 Bulletin 1995/32**

(73) Proprietor: **DSM N.V.**
**6411 TE Heerlen (NL)**

(72) Inventors:
- **Kuijk, Egbert Willem**
  **B-3500 Hasselt (BE)**
- **Tabaksblat, Ronald**
  **NL-6228 DP Maastricht (NL)**

(56) References cited:
**EP-A- 0 099 640** **EP-A- 0 384 472**
**EP-A- 0 542 108**

- **CHEMICAL ABSTRACTS, vol. 84, no. 8, 23 February 1976, Columbus, Ohio, US; abstract no. 45278, TOKUUME, MUTSUO 'Vitamin heat stabilizers for polyolefins' & JP-A-50 110 442 (MITSUI PETROCHEMICAL INDUSTRIES) 30 August 1975**
- **DATABASE WPI Week 8829, Derwent Publications Ltd., London, GB; AN 88-201284 & JP-A-63 137 941 (MITSUI TOATSU CHEM) 9 June 1988**
- **CHEMICAL ABSTRACTS, vol. 118, no. 22, 31 May 1993, Columbus, Ohio, US; abstract no. 214206, LAERMER, S.; ZAMBETTI, P. 'Alpha-tocopherol (vitamin E) - the natural antioxidant for polyolefins.' & J. PLAST. FILM SHEETING, vol.18, no.3, 1992 pages 228 - 248**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 666 283 B1

## Description

The invention relates to the use of low-density polyethylene (LDPE) for extrusion coating.

It has been known for a long time that LDPE is suitable for extrusion coating. Extrusion coating is a method involving the application of a polymer layer to a substrate with the aid of an extruder. In many cases said polymer layer is LDPE. The substrate may be for example paper or metal, such as aluminium. This method is further elucidated in 'Extrusion Coating of Paper and Paperboard: Equipment and Materials', 3rd edition, 1990, TAPPI. Extrusion coating is used for the manufacture of packagings for soaps, oils and fabric softeners but especially in the food packaging industry, for the manufacture of packagings for for example milk, fruit juices, water, etc. To ensure good adhesion of the LDPE to the substrate, extrusion is to be effected at very high temperatures, of 280°C - 340°C. The consequence of processing at such high temperatures is that the LDPE oxidizes, in which process oxidative degradation products are formed. On the one hand the oxidation of the LDPE is necessary to ensure good adhesion of the LDPE to the substrate, on the other hand the oxidative degradation products affect the odour and flavour of the contents of the packaging. The problem of effects on odours and flavours is also known as an organoleptic problem. The desire of course is to prevent the occurrence of this effect at all times.

The aim of the invention now is to prevent as much as possible the formation of oxidative degradation products that cause the organoleptic properties of the LDPE to deteriorate.

This aim is achieved in that 50-1000 ppm vitamin E has been added to the LDPE.

This addition causes the organoleptic properties of the extrusion-coated LDPE to improve without causing the adhesion to the substrate to deteriorate.

Although the Journal of Plastic Film and Sheeting, Vol. 8, July 1992, pp. 228-248, describes the addition of vitamin E to LDPE, it does not describe the extrusion coating of LDPE. The same holds true for the disclosure of JP 50110442. The processing of the LDPE described in the aforesaid article takes place only at relatively low temperatures, viz. 160-165°C. In this article no indication is given that the organoleptic problem of extrusion coating with LDPE can be solved by using vitamin E. The problem involved in the processing of LDPE is that the amount of oxidative degradation products increases very substantially as the temperature increases. As already mentioned above, the processing temperature for extrusion coating lies between 280°C and 340°C. At such high processing temperatures volatile compounds such as organic acids and aldehydes are formed. For example, when the temperature is increased from 280°C to 300°C the amount of volatile compounds formed increases 20-fold. These compounds affect the odour and flavour of the packaged foodstuffs. This is discussed in further detail in TAPPI Press, 1993 Polymers, Laminations & Coatings Conference, pp. 359-368.

Surprisingly it has now been found that even at very high processing temperatures, at which large amounts of oxidative degradation products are formed, only a very small amount of vitamin E suffices. Especially in view of the fact that vitamin E starts to evaporate above 300°C.

In general, additives are barred from the extrusion-coating market on account of the close contact with the foodstuffs. This is particularly important in the liquid packaging industry. Other additives such as phosphites, the usual phenolic antioxidants, etc., are inadmissible for such processors on account of the risk of migration of these compounds from the packaging into the contents. A compound like vitamin E presents the great advantage that it is a naturally occurring compound that is used or is already present in numerous foodstuffs.

LDPE is a material that is produced by means of high-pressure polymerisation with the aid of radical initiators. Said high-pressure polymerisation can be carried out at pressures of between 500 and 3500 atm. and temperatures of between 100 and 400°C, in a tubular or autoclave reactor or in a number of such reactors connected in series.

LDPE has a density, measured according to ASTM standard D 792-66, of between 0,915 and 0,935 g/cm$^3$. For extrusion coating the density is preferably between 0,917 and 0,930 g/cm$^3$. The melt flow index, measured according to ASTM standard D 1238, condition E, of LDPE is between 1 and 25 dg/min, preferably between 3 and 10 dg/min.

Vitamin E ($\alpha$-tocopherol) is a compound having the following structural formula:

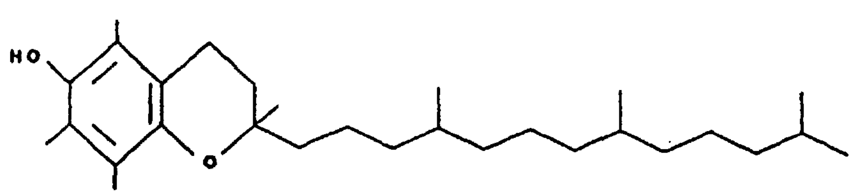

The amount of vitamin E that is added to the LDPE is between 50 and 1000 ppm, preferably between 100

and 500 ppm, and in particular between 150 and 300 ppm, for then the best odour and flavour properties are obtained.

Preferably the vitamin E is added to the LDPE in-line, in the LDPE production process. This is generally done with the aid of an extruder.

Extrusion coating is a method involving the continuous extrusion of a melted polymer onto a moving substrate. This is done as follows. A polymer, in the present case polyethylene, is melted with the aid of an extruder and is shaped into a (thin) layer or film by the extruder head. This film is then brought into contact with a substrate. The substrate may be paper, cardboard, aluminium foil or a (textile) fabric. The polyethylene film may optionally be stretched before it is brought into contact with the substrate. The substrate and the polyethylene film are compressed between two rolls. These two rolls are the so-called pressure roll and the cooling roll. The polyethylene film is passed directly over the cooling roll so that the film can simultaneously cool and solidify.

It is obvious that an extrusion-coating line may include two or more extruders, for example to coat both sides of the substrate.

The melting capacity of the extruder used is very important in view of the fact that the polyethylene must be heated to very high temperatures, generally of between 280°C and 340°C. Preferably the polyethylene is extrusion coated at a temperature of between 290 and 330°C. That also ensures a sufficiently high production rate.

The polyethylene, LDPE, with the vitamin E is applied in the extrusion-coating process in a layer with a thickness of between 2 and 100 μm, preferably between 10 and 40 μm, in particular between 15 and 30 μm.

The invention will be further elucidated with reference to the following examples. To this end a cast film of LDPE was produced as described in Comparative Experiment A so as to exclude the risk of any interactions with the substrate affecting the results of the measurements.

The density of the LDPE was determined as described in ASTM standard D 792-66.

The melt flow index of the LDPE was determined as described in ASTM standard D 1238, condition E.

In order to enable the determination of the oxidative degradation of the LDPE, the oxidation index of the cast film was determined as a measure of the total amount of oxidative degradation products. This was done by taking samples from the centre of the cast film, moulding them into a 100-μm thick film and determining the oxidation index by means of infrared spectrometry. Use was made of a Perkin-Elmer 1760X spectrometer. The oxidation index was calculated using the spectra obtained, i.e. by taking the quotient of the absorbance values at 1720 $cm^{-1}$ and 2660 $cm^{-1}$:

$$\text{oxidation index} = E(1720\ cm^{-1})/E(2660\ cm^{-1})$$

To determine the amount of volatile compounds in the cast films, 35 g of a film was cut up into pieces and introduced into a 250-ml flask. This flask was placed in an oven and the volatile compounds were vacuum distilled at 105°C for 3 hours at a pressure of $10^{-6}$ mbar. The distilled fraction was collected with the aid of a liquid nitrogen trap and dissolved in 0.1 ml of acetone; 1 μl of this solution was analysed with the aid of a GC-MS, a gas chromatograph-mass spectrometer, Finnigan 4610. A 25-m CP Sil5CB column with a diameter of 0.22 mm and a film thickness of 1.2 μm was used in the gas chromatograph.

The effects on odour and flavour were tested using a 20-μm thick cast film. 2 g of this film was cut up into pieces of 1x1 cm. These pieces were introduced into a glass bottle containing 1 litre of mineral water. The contents were stirred gently for 24 hours at a temperature of 23°C. The water samples were tasted by an odour and flavour panel consisting of 15 trained members. Paired comparison tests were used, in which the members of the panel each time had to choose which one of two water samples has the highest taste-level. The flavour scores were statistically evaluated. A significance of 95% was used.

Comparative Experiment A

To show the effect of the high extrusion temperature cast films were made at very high temperatures to simulate extrusion coating.

The cast films were made from Stamylan LD 1808AN00$^{R}$ from DSM using a laboratory Göttfert cast film line. The single-screw extruder had a diameter of 30 mm, a length/diameter (L/D) ratio of 20, a head width of 320 mm and a slot width of 0.5 mm. The flow opening of the head contained the so-called lips, which serve to control the film thickness. These lips were heated to extrusion temperature. The cooling roll was 320 mm wide, the film width was 280 mm and the line speed was 30 m/min. The cast films were produced at extrusion temperatures of 280°C and 300°C. The cast films produced were 20 μm thick at an extruder output of 135 g/min. Samples were taken of the films produced and the amounts of volatile oxidative degradation products were determined with the aid of the GC-MS as described above. The results are shown in Table 1.

Table 1

| Comp. Exp. A | GC measurements | | |
|---|---|---|---|
| temp. (°C) | organic acids (ppm) | aldehydes (ppm) | 2-ketones (ppm) |
| 280 | 0.23 | 0.085 | 0.13 |
| 300 | 6.0 | 1.8 | 0.37 |

The enormous increase in the amount of oxidative degradation products formed on a 20°C increase in processing temperature is clearly apparent from this table.

Example I and Comparative Experiment B

Method according to Comparative Experiment A involving an extrusion temperature of 290°C. Both vitamin E and, for comparison, a different, commercially available stabiliser commonly used for polyethylene were added to the LDPE. This stabiliser was Irganox B900$^R$, from Ciba Geigy. The oxidation index of these films was determined. Table 2 shows the results.

Table 2

| | 100 ppm vit. E | 500 ppm vit. E | 500 ppm Irg. B900 | reference (no stab.) |
|---|---|---|---|---|
| oxidation index | 0.017 | 0.016 | 0.028 | 0.028 |

The measurement results show that the use of vitamin E leads to much less oxidation than with the use of Irganox B900$^R$.

Example II

50, 100, 250 and 500 ppm vitamin E were dosed in the extruder to the Stamylan LD 1808AN00®. The oxidation indices of these films were also determined. The results are given in Table 3, which also shows the residual amount of vitamin E in the film after processing.

Table 3

| | 50 ppm vit. E | 100 ppm vit. E | 250 ppm vit. E | 500 ppm vit. E | 0 ppm vit. E |
|---|---|---|---|---|---|
| oxidation index | 0.043 | 0.017 | 0.017 | 0.017 | 0.032 |
| residual vit. E (ppm) | 0 | <10 | 30 | 80 | 0 |

This table shows that the optimum vitamin E dose lies between 100 and 500 ppm.
In a test performed by the odour and flavour panel the water that had been brought into contact with the film to which 250 ppm vitamin E had been added tasted significantly better than the reference without vitamin E.

## Claims

1. Use of low-density polyethylene (LDPE) for extrusion coating **characterized in that** 50-1000 ppm vitamin E has been added to the LDPE.

2. Use according to Claim 1, **characterised in that** 100-500 ppm vitamine E has been added to the LDPE.

3. Use according to Claim 1, **characterised in that** 150-300 ppm vitamine E has been added to the LDPE.

4. Use according to any one of Claims 1-3, **characterised in that** the LDPE has a density of between 0,915 and 0,935 g/cm$^3$.

5. Use according to any one of Claims 1-4, **characterised in that** the LDPE has a melt flow index of between 1 and 25 dg/min.

## Patentansprüche

1. Verwendung von Polyethylen mit niedriger Dichte (LDPE) zur Extrusionsbeschichtung, **dadurch gekennzeichnet, dass** 50 bis 1000 ppm Vitamin E zu dem LDPE gegeben wurden.

2. Verwendung nach Anspruch 1, **dadurch gekennzeichnet, dass** 100 bis 500 ppm Vitamin E zu dem LDPE gegeben wurden.

3. Verwendung nach Anspruch 1, **dadurch gekennzeichnet, dass** 150 bis 300 ppm Vitamin E zu dem LDPE gegeben wurden.

4. Verwendung nach einem der Ansprüche 1 bis 3, **dadurch gekennzeichnet, dass** das LDPE eine Dichte zwischen 0,915 und 0,935 $g/cm^3$ aufweist.

5. Verwendung nach einem der Ansprüche 1 bis 4, **dadurch gekennzeichnet, dass** das LDPE einen Schmelzflussindex zwischen 1 und 25 dg/min aufweist.

## Revendications

1. Utilisation de polyéthylène basse densité (LDPE) pour le revêtement par extrusion, **caractérisée en ce que** l'on ajoute 50 à 1000 ppm de vitamine E au LDPE.

2. Utilisation selon la revendication 1, **caractérisée en ce que** l'on ajoute 100 à 500 ppm de vitamine E au LDPE.

3. Utilisation selon la revendication 1, **caractérisée en ce que** l'on ajoute 150 à 300 ppm de vitamine E au LDPE.

4. Utilisation selon l'une quelconque des revendications 1 à 3, **caractérisée en ce que** le LDPE a une densité entre 0,915 et 0,935 $g/cm^3$.

5. Utilisation selon l'une quelconque des revendications 1 à 4, **caractérisée en ce que** le LDPE a un indice de fusion entre 1 et 25 dg/minute.